# EUROPEAN PATENT SPECIFICATION

(11) **EP 2 712 096 B1**
(45) Date of publication and mention of the grant of the patent: **22.07.2015**
(21) Application number: 12306157.4
(22) Date of filing: 25.09.2012
(51) Int. Cl.: H04B 3/54, H02H 9/04, H04M 3/18

(54) **Method and system for detecting a disturber in a PLC network**
Verfahren und System zur Detektion eines Störers in einem PLC-Netzwerk
Procédé et système pour détecter une paire torsadée perturbatrice dans un réseau PLC

(43) Date of publication of application: 26.03.2014
(73) Proprietor: ALCATEL LUCENT, 92100 Boulogne-Billancourt (FR)
(72) Inventor: Dupuis, Nicolas, 4051 Chaudfontaine (BE); Drooghaag, Benoît, 1421 Ophain-Bois-Seigneur-Isaac (BE)
(74) Representative: ALU Antw Patent Attorneys

(56) References cited:
- EP-A2- 1 162 759
- WO-A1-2007/090891
- US-A1- 2007 156 927
- US-A1- 2012 093 240
- US-B1- 7 091 849

## Description

### Field of the Invention

The present invention relates to the field of power line communications (PLC), and in particular to the field of fault detection in PLC networks.

### Background

In PLC networks, digital information is transmitted at high bit rates over a medium that was not originally designed for this purpose. As in the case of DSL, which uses telephone wiring for high-speed data transfer, the use of unstructured wiring poses many challenges, including high attenuation, noise, bridged taps, and cross-talk from other (similar or alien) transceivers.

In electricity networks, end users often place additional devices in series with the PLC transceivers, which severely affect the quality of the channel. One class of such disturbers consists of surge protectors or electro-magnetic injuries filters. The presence of such disturbers may compromise the quality of service, which may cause the end user to contact their service provider for technical support. Presently, the service provider does not have adequate tools to remotely assess issues related to the subscriber's PLC network.

US2012/0093240 describes a device and method for identifying a disturber in a PLC network. WO2007/090891 discloses a network surveillance method for PLC system.

### Summary

It is an object of embodiments of the present invention to facilitate detection of disturbers in a PLC network, in particular disturbers consisting of passive devices placed in series with the PLC transceivers, more in particular surge protectors or electro-magnetic injuries filters.

According to an aspect of the invention, there is provided a method for detecting a disturber in a PLC network comprising a PLC transmitter and a PLC receiver connected by a segment of the PLC network, the method comprising: obtaining channel frequency response information pertaining to the segment; fitting an undisturbed channel extrapolation to the channel frequency response information, the undisturbed channel extrapolation being characteristic of frequency-dependent signal attenuation on an undisturbed transmission line; calculating at least one parameter representative of the difference between the channel frequency response information and the undisturbed channel extrapolation; and applying a decision criterion to the at least one parameter to determine presence or absence of the disturber in the PLC network.

The present invention is based *inter alia* on the insight of the inventors that the difference between the expected disturber-free envelope and the actual channel frequency response contains the necessary information to detect the presence of absence of a disturber. This insight has been confirmed by field measurements and lab tests.

In an embodiment of the method according to the present invention, at least one of the PLC transmitter and the PLC receiver comprises a management agent, and the obtaining of the channel frequency response information comprises receiving the channel frequency response information from the management agent.

It is an advantage of this embodiment, that no technician need to come to the site to make an adequate assessment of the condition of the PLC network.

In an embodiment of the method according to the present invention, the at least one parameter comprises a maximum value over all values in a relevant frequency domain of the difference between an attenuation given by the undisturbed channel extrapolation and an attenuation given by the channel frequency response information.

In an embodiment of the method according to the present invention, the at least one parameter comprises a summation or integration over a relevant frequency domain of the difference between an attenuation given by the undisturbed channel extrapolation and an attenuation given by the channel frequency response information.

This particular choice of parameters is based on the inventors' insight that a particular class of disturbers, *viz*. surge protectors, present characteristics "dips" in the channel frequency response, which are sufficiently different from features such as bridged taps, and which may be effectively quantified by those parameters.

In an embodiment of the method according to the present invention, the channel frequency response information is downsampled, and the at least one parameter comprises distinct evaluations of the same function at different levels of downsampling.

It is an advantage of this embodiment that information about features present in the channel frequency response is optimally used by analyzing it at different resolutions.

In a particular embodiment, the channel frequency response information is downsampled by calculating predetermined percentile values over a variable numbers of bins.

It is an advantage of this embodiment, that the algorithm will use a series of values that stays close to the peaks of the curve (which is important for a proper extrapolation of the undisturbed line characteristics), while having sufficient sensitivity to significant downward trends or dips.

In an embodiment of the method according to the present invention, the applying of the decision criterion comprises calculating a scalar function value of the at least one parameter, and comparing the scalar function value to a predetermined threshold.

This embodiment provides an efficient and clear criterion for the determination of presence or absence of a target disturber.

In an embodiment, the method according to the present invention further comprises establishing the scalar function and the threshold by means of a machine learning algorithm.

According to an aspect of the present invention, there is provided a computer program comprising software means configured to perform, when executed, the method as described above.

According to an aspect of the present invention, there is provided a system for detecting a disturber in a PLC network comprising a PLC transmitter and a PLC receiver connected by a segment of the PLC network, the system comprising: an input interface configured to obtain channel frequency response information pertaining to the segment; a processor, configured to: fit an undisturbed channel extrapolation to the channel frequency response information, the undisturbed channel extrapolation being characteristic of frequency-dependent signal attenuation on an undisturbed transmission line; calculate at least one parameter representative of the difference between the channel frequency response information and the undisturbed channel extrapolation; and apply a decision criterion to the at least one parameter to determine presence or absence of the disturber in the PLC network; and an output interface to signal the presence or absence of the disturber.

The technical effects and advantages of the computer program and system according to the present invention correspond *mutatis mutandis* to those of the corresponding embodiments of the method according to the present invention.

### Brief Description of the Figures

Some embodiments of apparatus and/or methods in accordance with embodiments of the present invention are now described, by way of example only, and with reference to the accompanying drawings, in which:
Figure 1 provides an overview of an exemplary network in which the present invention may be applied;
Figure 2 provides a flow chart of an exemplary embodiment of the method according to the present invention;
Figure 3 provides a schematic illustration of a system according to an embodiment of the present invention;
Figure 4 illustrates a generalized surge protection circuit, as may be detected by embodiments of the present invention; and
Figure 5 is an illustration of exemplary channel frequency response information, fitted undisturbed channel extrapolation, and decision parameters, as obtained in embodiments of the method according to the present information.

### Description of Embodiments

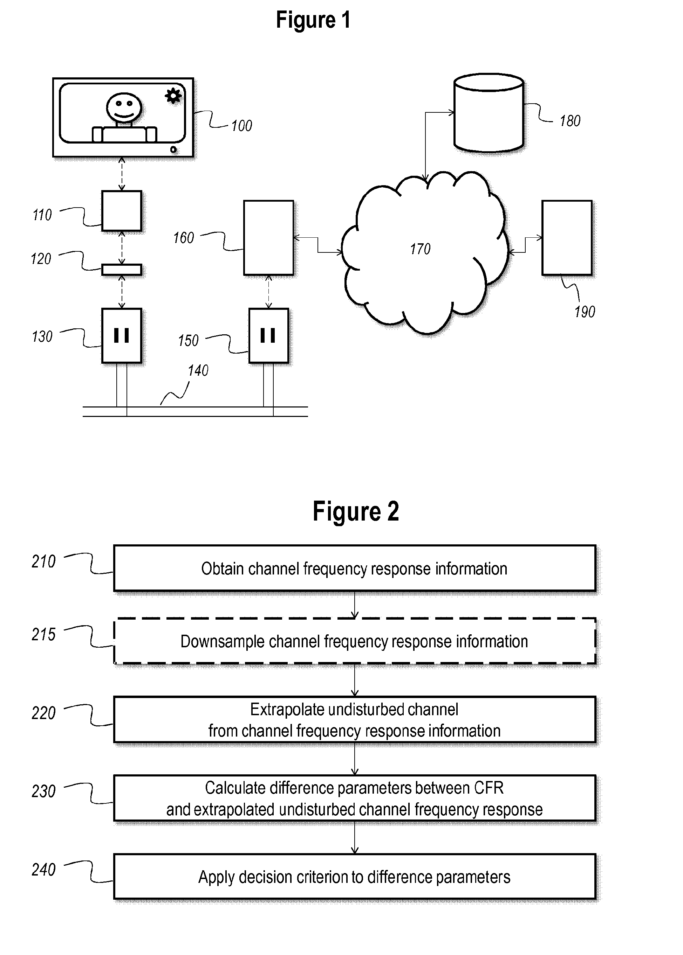

Figure 1 provides an overview of an exemplary network in which the present invention may be applied. An end user apparatus such as a television set **100** is provided with a PLC transceiver **110** for communication over power wiring **140** via a first power socket **130.** At a second power socket **150,** connected to the same power wiring **140,** a modem **160** bridges between the PLC network and any appropriate access interface, providing access to a service provider network **170** and preferably the Internet. The access interface may for instance include an interface for an xDSL, xPON, WMAN, or 3G link. Without loss of generality, the modem **160** is illustrated as one device with an integrated PLC transceiver, but the network may alternatively comprise another separate PLC transceiver with a LAN or PAN interface, and a separate modem device with a corresponding LAN or PAN interface and an access interface, connected to the PLC transceiver via the LAN or PAN. A LAN interface may for instance include an interface for one or more of an IEEE 802.3 "Ethernet" link, an IEEE 802.11 "Wireless LAN" link. A PAN interface may for instance include a USB interface or a Bluetooth interface.

The term "interface" designates the necessary hardware and software required to establish data communication connectivity across the various layers of the protocol stack, as is well known to a person skilled in the art. Preferably, standardized protocols are used.

The service provider network **170** preferably connects to one or more servers **180** that provide services to the end user, such as a TV-over-IP of Video-on-Demand service. The service provider network **170** preferably also connects to a management server **190,** such as the Alcatel-Lucent "Network Analyzer", which is capable of detecting problems in the end-to-end network between the relevant servers **180** and the end user devices **100.**

Although only two PLC devices are shown in Figure 1, this is done to illustrate the concept in the simplest way, without intending to limit the invention in any way.

In the illustrated network, a surge protector **120** is present between the first power socket **130** and the first PLC transceiver **110.** The term "surge protector" is used herein to use any kind of EMI filter, as is commonly used by consumers to protect sensitive electrical or electronic equipment, which is placed in series (bipolar) between the electrical grid and the equipment. The presence of this surge protector **120** will affect the properties of the channel as experienced between the respective PLC transceivers **110, 160,** in each direction.

Figure 2 provides a flow chart of an exemplary embodiment of the method according to the present invention. The method is applied to a PLC network comprising a PLC transmitter and a PLC receiver connected by a segment of said PLC network. It is an object of this embodiment to detect a disturber in the PLC network. For clarity purposes, the network will be explained with reference to the elements illustrated in Figure 1.

The method is typically applied when problems are detected at the service level, e.g. when the subscriber notices that the quality of a received TV-over-IP signal is unsatisfactory, or the internet connection is perceived to be slow. In such cases, the subscriber will typically contact the service provider's help desk, who will need to be able to assess the situation. The detection of the disturber, in particular the surge protector **120,** is preferably carried out without sending a technician to the site.

In a first step, the illustrated method comprises obtaining **210** channel frequency response information pertaining to the PLC network segment **140.** The term "channel frequency response information" is used herein to denote digital information representing the transfer function of the channel between a PLC transmitter and a PLC receiver, as actually measured at the receiver side. As it consists of a digital representation of a measured function, it will be discretized and quantized. The channel frequency response may be obtained by carrying out an on-site measurement using dedicated equipment, but it is preferably read remotely, e.g. by the management server **190,** from the PLC transceiver's management agent. This requires that the concerned PLC transceiver has a MIB which can be read out remotely, which is typically implemented by means of an SNMP protocol stack.

It should be noted that the capability of performing a channel frequency response measurement is inherent in PLC transceivers according to the presently deployed technologies, because these technologies use OFDM modulation, and the channel information is used to carry out bit loading algorithms.

In a second step, an undisturbed channel extrapolation is fitted **220** to the channel frequency response information. The fitted undisturbed channel extrapolation is a characteristic of the normal frequency-dependent signal attenuation that would be expected on an undisturbed transmission line of a given length. Conceptually, the fitting consists of estimating the length of the channel, and thus the shape of the channel frequency response that would be measured on this network in the absence of disturbers. However, the fitting process does not necessarily include an actual length estimation step.

Preferably, the fitting process comprises interpolation by a tangent curve. Graphically, and applying some non-substantive simplifications, this process may be visualized as finding a decreasing log-linear function of frequency that touches the channel frequency response curve in at least two points (including the highest maximum of the channel frequency response curve).

In a third step, at least one parameter representative of the difference between the channel frequency response information and the undisturbed channel extrapolation is calculated **230.**

Preferably, the at least one parameter comprises a maximum value over all values in a relevant frequency domain of the difference between an attenuation given by said undisturbed channel extrapolation and an attenuation given by said channel frequency response information and/or a summation or integration over a relevant frequency domain of the difference between an attenuation given by said undisturbed channel extrapolation and an attenuation given by said channel frequency response information. The former parameter graphically corresponds to the maximal difference between the two curves (measured CFR and undisturbed channel extrapolation), while the latter parameter graphically corresponds to the area between the same two curves.

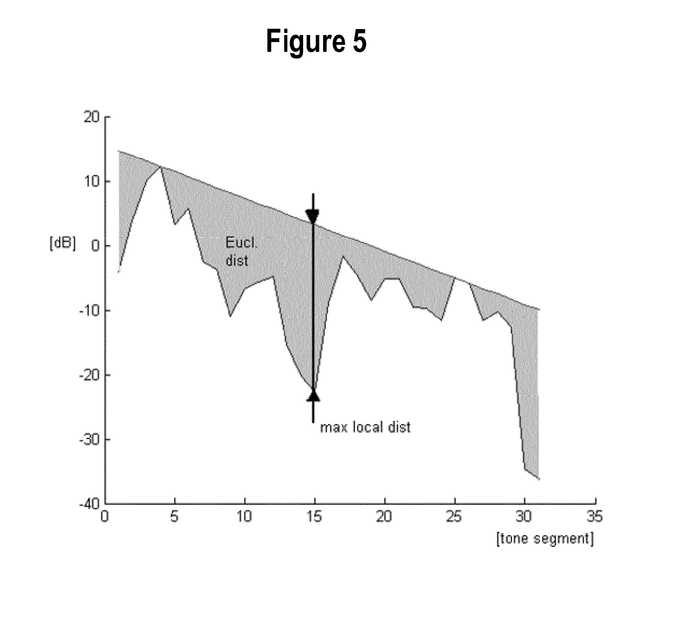

To further illustrate the above steps, Figure 5 shows exemplary channel frequency response information (the jagged line), along with an undisturbed channel extrapolation obtained by tangent curve interpolation (the decreasing straight line). As relevant derived parameters, the Euclidian distance (the shaded area) and the maximum local distance (vertical double arrow) are shown.

The channel frequency response information may be downsampled **215** at one or more levels, and one or more downsampled versions of the channel frequency response may be used in undisturbed channel extrapolation and/or in calculation the parameters, to obtain additional inputs for the decision criterion. The downsampling may be carried out by calculating predetermined percentile values over a variable numbers of bins. Good results have been obtained by assigning the 50-percentile or the 90-percentile value to each bin.

The at least one parameter is then used to apply a decision criterion **240** in order to determine presence or absence of said disturber in said PLC network.

Applying the decision criterion may comprise calculating a scalar function value of the at least one parameter, and comparing the scalar function value to a predetermined threshold. The scalar function (and optionally the threshold value) is preferably established by means of a machine learning algorithm, using measured channel frequency response information of known PLC networks and the known presence or absence of a target disturber to train the algorithm. Applicable algorithms include logistic curves, neural networks, support vector machine, Bayesian network, etc.

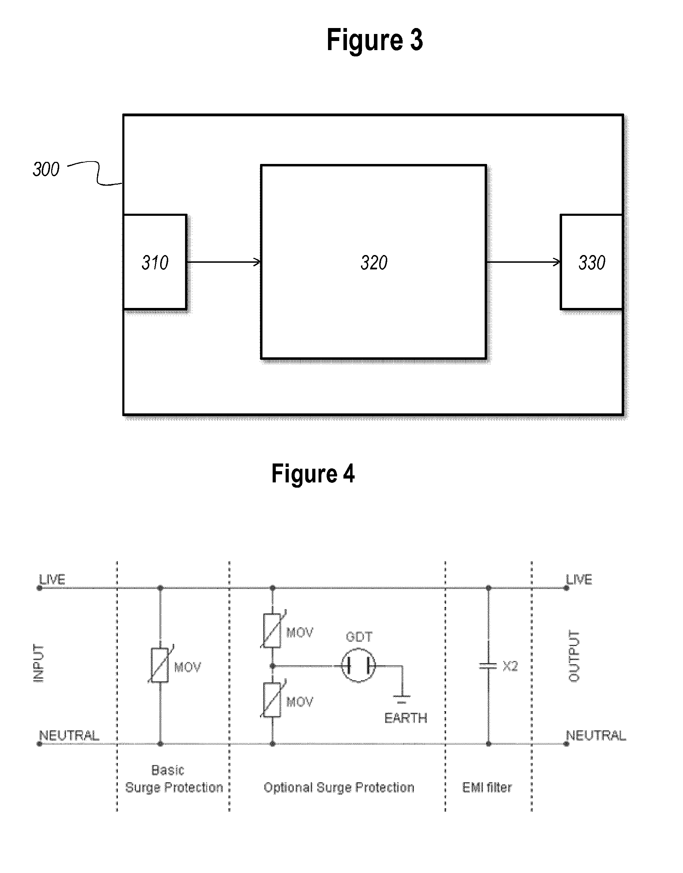

Figure 3 provides a schematic illustration of a system according to an embodiment of the present invention.

The illustrated system **300** comprises an input interface **310** configured to obtain channel frequency response information pertaining to the examined segment. The system **300** further comprises a processor **320,** configured to fit an undisturbed channel extrapolation to the channel frequency response information, characteristic of frequency-dependent signal attenuation on an undisturbed transmission line; calculate at least one parameter representative of the difference between the (downsampled and/or otherwise preprocessed) channel frequency response information and the undisturbed channel extrapolation; and apply a decision criterion to said at least one parameter to determine presence or absence of said disturber in said PLC network. Furthermore, the system **300** comprises an output interface **330** to signal the presence or absence of the disturber, as detected by the processor **320** by application of the decision criterion.

The processor **320** is interconnected with the input interface **310** and the output interface **330** in known ways. The operation is of the processor **320** is in accordance with the method as described with reference to Figure 2.

Although methods and apparatus have been described hereinabove as separate embodiments, this is done for clarity purposes only, and it should be noted that features described only in connection with method embodiments may be applied in the apparatus according to the present invention to obtain the same technical effects and advantages, and vice versa.

Embodiments of the present invention are particularly efficient in detecting the present of standard surge protection devices. These devices may include one or more of the partial circuits illustrated in Figure 4 (delineated by vertical dashed lines).

For example, in the simplest surge protector, a varistor, or MOV (basic surge protection section) is the only component that will impact the PLC channel response.

More advanced surge protections are also using MOVs between live and neutral wires and the earth wire, in combination with a Gas-Discharge-Tube, or GDT (optional surge protection section). As the GDT exhibits a very low capacitance, it can be considered as an open circuit in the PLC frequency range. It results in a series combination of two MOVs connected between live and neutral wires, in parallel on the first MOV from the basic surge protection section.

To the other hand, simple EMI filters are based only on a single EMI filter (X2 capacitor).

Finally, in some devices, a combination of both surge protection (basic and optional sections) and EMI-filter are encountered. In that case, both the varistors (MOV) of the surge protection and the EMI-filter (X2 capacitor) are involved.

It must be noticed that, beyond the X2 capacitor, the MOVs, because of their physical construction, also act as capacitors in the PLC frequency band. Moreover, like every real capacitor, the X2 capacitor and each MOVs will resonate with a "stray" inductance (made of the combination of the inductances of the component legs and PCB tracks). This resonance occurs at the so-called "self-resonant frequency", and strongly impacts the PLC channel transfer response by creating a big hole in it (resulting in significant bitrate loss). This phenomenon occurs typically for X2 capacitors between 1 and 2MHz, while MOVs show the same behavior higher in frequency (typically above 10Mhz, because the capacitance is lower). Finally, as the resonance frequency is not only a function of component choice but also PCB design, different "signatures" can be found among various EMI filters or surge protections manufacturers.

The functions of the various elements shown in the figures, including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A method for detecting a disturber (120) in a PLC network comprising a PLC transmitter (160) and a PLC receiver (110) connected by a segment of said PLC network, said method comprising:
- applying a decision criterion to at least one parameter to determine presence or absence of said disturber in said PLC network
**characterized in that** the method further comprises, before the step of applying the decision, following steps:
- obtaining (210) channel frequency response information pertaining to said segment;
- fitting an undisturbed channel extrapolation (220) to said channel frequency response information, said undisturbed channel extrapolation being characteristic of frequency-dependent signal attenuation on an undisturbed transmission line;
- calculating (230) said at least one parameter representative of the difference between said channel frequency response information and said undisturbed channel extrapolation.

2. The method according to claim 1, wherein at least one of said PLC transmitter (160) and said PLC receiver (110) comprises a management agent, and wherein said obtaining of said channel frequency response information comprises receiving said channel frequency response information from said management agent.

3. The method according to any of the preceding claims, wherein said at least one parameter comprises a maximum value over all values in a relevant frequency domain of the difference between an attenuation given by said undisturbed channel extrapolation and an attenuation given by said channel frequency response information.

4. The method according to any of the preceding claims, wherein said at least one parameter comprises a summation or integration over a relevant frequency domain of the difference between an attenuation given by said undisturbed channel extrapolation and an attenuation given by said channel frequency response information.

5. The method according to any of the preceding claims, wherein said channel frequency response information is downsampled (215), and wherein said at least one parameter comprises distinct evaluations of the same function at different levels of downsampling.

6. The method according to claim 5, wherein said channel frequency response information is downsampled by calculating predetermined percentile values over a variable numbers of bins.

7. The method according to any of the preceding claims, wherein said applying of said decision criterion comprises calculating a scalar function value of said at least one parameter, and comparing said scalar function value to a predetermined threshold.

8. The method according to claim 7, further comprising establishing said scalar function and said threshold by means of a machine learning algorithm.

9. A computer program comprising software means configured to perform, when executed, the method of any of the preceding claims.

10. A system for for detecting a disturber (120) in a PLC network comprising a PLC transmitter (160) and a PLC receiver (110) connected by a segment of said PLC network, said system comprising:
- an input interface (310);
- a processor (320), configured to:
- apply a decision criterion to said at least one parameter to determine presence or absence of said disturber in said PLC network;
and
- an output interface (330) to signal said presence or absence of said disturber (120)
**characterized in that** the input interface is configured to obtain channel frequency response information pertaining to said segment, and **in that** the processor is further configured to, before applying said decision:
- fit an undisturbed channel extrapolation to said channel frequency response information, said undisturbed channel extrapolation being characteristic of frequency-dependent signal attenuation on an undisturbed transmission line; and- calculate at least one parameter representative of the difference between said channel frequency response information and said undisturbed channel extrapolation.

## Patentansprüche

1. Verfahren zum Erkennen eines Störers (120) in einem PLC-Netzwerk, umfassend einen PLC-Transmitter (160) und einen PLC-Empfänger (110), verbunden durch ein Segment besagten PLC-Netzwerks, wobei das besagte Verfahren umfasst:
- Anwenden eines Entscheidungskriteriums auf mindestens einen Parameter zur Bestimmung des Vorhandenseins oder Nichtvorhandenseins besagten Störers in besagtem PLC-Netzwerk,
**gekennzeichnet dadurch, dass** das Verfahren vor dem Schritt der Entscheidungsanwendung weiterhin die folgenden Schritte umfasst:
- Erhalten (210) von Kanalfrequenzverhaltensinformation betreffend das besagte Segment;
- Anfügen einer ungestörten Kanalextrapolation (220) an besagte Kanalfrequenzverhaltensinformation, wobei besagte ungestörte Kanalextrapolation charakteristisch ist für die frequenzabhängige Signaldämpfung in einer ungestörten Übertragungsleitung;
- Berechnen (230) des besagten mindestens eines repräsentativen Parameters der Differenz zwischen besagter Kanalfrequenzverhaltensinformation und besagter ungestörter Kanalextrapolation.

2. Verfahren nach Anspruch 1, wobei mindestens einer der besagten SPS-Transmitter (160) und der besagten PLC-Empfänger (110) einen Verwaltungsagenten umfasst, und wobei besagter Erhalt besagter Kanalfrequenzverhaltensinformation den Erhalt besagter Kanalfrequenzverhaltensinformation von besagtem Verwaltungsagenten umfasst.

3. Verfahren nach einem beliebigen der vorstehenden Ansprüche, wobei besagter mindestens ein Parameter einen Höchstwert aller Werte in einem relevanten Frequenzbereich der Differenz zwischen einer durch besagte ungestörte Kanalextrapolation gegebenen Dämpfung und einer durch besagte Kanalfrequenzverhaltensinformation gegebenen Dämpfung umfasst.

4. Verfahren nach einem beliebigen der vorstehenden Ansprüche, wobei bei besagter mindestens ein Parameter eine Summierung oder Integration über einen relevanten Frequenzbereich der Differenz zwischen einer durch besagte ungestörte Kanalextrapolation gegebenen Dämpfung und einer durch besagte Information über das Kanalfrequenzverhalten gegebenen Dämpfung umfasst.

5. Verfahren nach einem beliebigen der vorstehenden Ansprüche, wobei besagte Information über das Kanalfrequenzverhalten downgesampled wird (215), und wobei besagter mindestens ein Parameter unterschiedliche Bewertungen derselben Funktion bei verschiedenen Downsamplinggraden umfasst.

6. Verfahren nach Anspruch 5, wobei besagte Information über das Kanalfrequenzverhalten downgesampled wird durch Berechnen vorbestimmter Prozentwerte über eine variable Anzahl Segmente.

7. Verfahren nach einem beliebigen der vorstehenden Ansprüche, wobei besagte Anwendung besagten Entscheidungskriteriums die Berechnung eines skalaren Funktionswerts des besagten mindestens einen Parameters und den Vergleich besagten skalaren Funktionswerts mit einem vorbestimmten Grenzwert umfasst.

8. Verfahren nach Anspruch 7, weiterhin umfassend die Aufstellung besagter skalarer Funktion und besagten Grenzwerts mittels eines Algorithmus des maschinellen Lernens.

9. Computerprogramm, umfassend konfigurierte Softwaremittel, die bei Ausführung das Verfahren nach einem beliebigen der vorstehenden Ansprüche durchführen.

10. System zum Erkennen eines Störers (120) in einem PLC-Netzwerk, umfassend einen PLC-Transmitter (160) und einen PLC-Empfänger (110), verbunden durch ein Segment besagten PLC-Netzwerks, wobei das besagte System umfasst:
- eine Eingangsschnittstelle (310);
- einen Prozessor (320), konfiguriert für:
- Anwenden eines Entscheidungskriteriums für besagten mindestens einen Parameter zum Bestimmen von Vorhandensein oder Nichtvorhandensein besagten Störers in besagtem PLC-Netzwerk;
und
- eine Ausgangsschnittstelle (320) zum Signalisieren besagten Vorhandenseins oder Nichtvorhandenseins besagten Störers (120),
**dadurch gekennzeichnet, dass** die Eingangsschnittstelle konfiguriert ist zum Erhalten von Informationen über das Kanalfrequenzverhalten besagten Segments und dadurch, dass der Prozessor weiterhin konfiguriert ist, vor Anwendung besagter Entscheidung:
- Anfügen einer ungestörten Kanalextrapolation zu besagter Kanalfrequenzverhaltensinformation, wobei besagte ungestörte Kanalextrapolation charakteristisch ist für frequenzabhängige Signaldämpfung in einer ungestörten Übertragungsleitung; und Berechnen mindestens eines repräsentativen Parameters für die Differenz zwischen besagter Kanalfrequenzverhaltensinformation und besagter ungestörter Kanalextrapolation.

## Revendications

1. Procédé de détection d'un perturbateur (120) dans un réseau CPL comprenant un émetteur CPL (160) et un récepteur CPL (110) connectés par un segment dudit réseau CPL, ledit procédé comprenant l'étape suivante :
- appliquer un critère de décision à au moins un paramètre pour déterminer la présence ou l'absence dudit perturbateur dans ledit réseau CPL
**caractérisé en ce qu'**il comprend en outre, avant l'étape d'application de la décision, les étapes suivantes :
- obtenir (210) des informations de réponse de fréquence de canal se rapportant audit segment ;
- adapter une extrapolation de canal non perturbé (220) auxdites informations de réponse de fréquence de canal, ladite extrapolation de canal non perturbé étant caractéristique de l'atténuation de signal dépendant de la fréquence sur une ligne de transmission non perturbée ;
- calculer (230) ledit au moins un paramètre représentatif de la différence entre lesdites informations de réponse de fréquence de canal et ladite extrapolation de canal non perturbé.

2. Procédé selon la revendication 1, dans lequel au moins un élément parmi ledit émetteur CPL (160) et ledit récepteur CPL (110) comprend un agent de gestion, et dans lequel ladite obtention desdites informations de réponse de fréquence de canal comprend la réception desdites informations de réponse de fréquence de canal à partir dudit agent de gestion.

3. Procédé selon l'une quelconque des revendications précédentes, dans lequel ledit au moins un paramètre comprend une valeur maximum par rapport à toutes les valeurs dans un domaine fréquentiel approprié de la différence entre une atténuation donnée par ladite extrapolation de canal non perturbé et une atténuation donnée par lesdites informations de réponse de fréquence de canal.

4. Procédé selon l'une quelconque des revendications précédentes, dans lequel ledit au moins un paramètre comprend une somme ou une intégration sur un domaine fréquentiel approprié de la différence entre une atténuation donnée par ladite extrapolation de canal non perturbé et une atténuation donnée par lesdites informations de réponse de fréquence de canal.

5. Procédé selon l'une quelconque des revendications précédentes, dans lequel lesdites informations de réponse de fréquence de canal sont sous-échantillonnées (215), et dans lequel ledit au moins un paramètre comprend des évaluations distinctes de la même fonction à des niveaux différents de sous-échantillonnage.

6. Procédé selon la revendication 5, dans lequel lesdites informations de réponse de fréquence de canal sont sous-échantillonnées en calculant des valeurs percentiles prédéterminées par rapport à un nombre variable de segments.

7. Procédé selon l'une quelconque des revendications précédentes, dans lequel ladite application dudit critère de décision comprend le calcul d'une valeur de fonction scalaire dudit au moins un paramètre, et la comparaison de ladite valeur de fonction scalaire par rapport à un seuil prédéterminé.

8. Procédé selon la revendication 7, comprenant en outre l'établissement de ladite fonction scalaire et dudit seuil au moyen d'un algorithme d'apprentissage automatique.

9. Programme informatique comprenant des moyens logiciels configurés pour mettre en ouvre, lorsqu'il est exécuté, le procédé selon l'une quelconque des revendications précédentes.

10. Système de détection d'un perturbateur (120) dans un réseau CPL comprenant un émetteur CPL (160) et un récepteur CPL (110) connectés par un segment dudit réseau CPL, ledit système comprenant :
- une interface d'entrée (310) ;
- un processeur (320), configuré pour :
- appliquer un critère de décision audit au moins un paramètre pour déterminer la présence ou l'absence dudit perturbateur dans ledit réseau CPL ;
et
- une interface de sortie (330) pour signaler ladite présence ou ladite absence dudit perturbateur (120)
**caractérisé en ce que** l'interface d'entrée est configurée pour obtenir des informations de réponse de fréquence de canal se rapportant audit segment, et **en ce que** le processeur est en outre configuré, avant d'appliquer ladite décision :
- pour adapter une extrapolation de canal non perturbé auxdites informations de réponse de fréquence de canal, ladite extrapolation de canal non perturbé étant caractéristique de l'atténuation de signal dépendant de la fréquence sur une ligne de transmission non perturbée ; et pour calculer au moins un paramètre représentatif de la différence entre lesdites informations de réponse de fréquence de canal et ladite extrapolation de canal non perturbé.
